(19) Europäisches Patentamt / European Patent Office / Office européen des brevets

(11) EP 2 013 239 B1

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **07727830.7**

(22) Anmeldetag: **05.04.2007**

(51) Int Cl.:
***C08F 2/22*** *(2006.01)*

(86) Internationale Anmeldenummer:
**PCT/EP2007/053362**

(87) Internationale Veröffentlichungsnummer:
**WO 2007/122089 (01.11.2007 Gazette 2007/44)**

(54) **VERWENDUNG EINER WÄSSRIGEN POLYMERZUSAMMENSETZUNG ALS BINDEMITTEL FÜR FASERFÖRMIGE ODER KÖRNIGE SUBSTRATE**

USE OF AN AQUEOUS POLYMER COMPOSITION AS BINDER FOR FIBROUS OR PARTICULATE SUBSTRATES

UTILISATION D'UNE COMPOSITION DE POLYMÈRE AQUEUSE COMME LIANT POUR DES SUBSTRATS SOUS FORME DE FIBRES OU DE GRAINS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.04.2006 DE 102006019184**

(43) Veröffentlichungstag der Anmeldung:
**14.01.2009 Patentblatt 2009/03**

(73) Patentinhaber: **BASF SE**
**67056 Ludwigshafen am Rhein (DE)**

(72) Erfinder:
- **ELIZALDE, Oihana**
  **68159 Mannheim (DE)**
- **GERST, Matthias**
  **67435 Neustadt (DE)**

(74) Vertreter: **BASF IP Association**
**BASF SE**
**G-FLP-C006**
**67056 Ludwigshafen (DE)**

(56) Entgegenhaltungen:
**WO-A-03/035778 DE-A1- 19 900 459**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 013 239 B1

## Beschreibung

Gegenstand der vorliegenden Erfindung ist die Verwendung einer wässrigen Polymerzusammensetzung als Bindemittel für faserförmige oder körnige Substrate, wobei die wässrige Polymerzusammensetzung erhältlich ist durch radikalische initiierte Emulsionspolymerisation eines Monomerengemisches M in einem wässrigen Medium in Gegenwart eines Polymers A, wobei das Polymer A aus

a) 80 bis 100 Gew.-% wenigstens einer ethylenisch ungesättigten Mono- und/oder Dicarbonsäure [Monomere A1] und
b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei das Monomerengemisch M zusammengesetzt ist aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
ii) 90 bis 99,99 Gew.-% wengistens eines weiteren ethylenisch ungesättigten Monomeren M2, welches sich von den Monomeren M1 unterscheidet,
und wobei als Monomere M2 solche Monomerenmischungen eingesetzt werden, welche zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanalen, oder
- 0,1 bis 5 Gew.-% wenigstens eine 3 bis 6 C-Atome aufweisende a,$\beta$-monoethylenisch ungesättigte Mono- und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende a,$\beta$-monoethylenisch ungesättigte Monoundloder Dicarbonsäure undloder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende a,$\beta$-monoethylenisch ungesättigte Mono- und/oder Dicarbonsäure und/oder deren Amid und
- 40 bis 99,9 Gew.-% Vinylacetat, Vinylpropionat und/oder Ethylen enthalten.

Gegenstand der vorliegenden Erfindung ist ebenfalls ein Verfahren zur Herstellung von Formkörpern unter Verwendung von faserförmigen oder körnigen Substraten sowie die Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US 4,076,917 Bindemittel bekannt, welche Carbonsäure- oder Carbonsäureanhydrid-haltige Polymerisate und $\beta$-Hydroxyalkylamide als Vernetzer enthalten. Nachteilig ist die relativ aufwendige Herstellung der $\beta$-Hydroxyalkylamide.

Aus der EP-A 445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren. Die Wasserfestigkeit der erhaltenen Platten ist jedoch nicht zufriedenstellend.

Aus der EP-A 583 086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden $\beta$-Hydroxyalkylamide genannt.

Die EP-A 651 088 beschreibt entsprechende Bindemittel für Substrate aus Cellulosefaser. Diese Bindemittel enthalten zwingend einen phosphorhaltigen Reaktionsbeschleuniger.

Die EP-A 672 920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer

aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A 22 14 450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Die EP-A 257 567 beschreibt eine Polymerzusammensetzung, die erhältlich ist durch Emulsionspolymerisation von ethylenisch ungesättigten Monomeren, wie Olefine, vinylaromatische Verbindungen, a,β-ethylenisch ungesättigte Carbonsäuren und deren Ester, ethylenisch ungesättigte Dicarbonsäureanhydride und Vinylhalogenide. Während der Polymerisation wird ein in Wasser oder Alkali lösliches oder dispergierbares Harz mit einem zahlenmittleren Molekulargewicht von etwa 500 bis etwa 20000 zugegeben, um die Fließeigenschaften der Polymerisatzusammensetzung zu beeinflussen.

Das Harz ist aus Olefinen, vinylaromatischen Verbindungen, α,β-ethylenisch ungesättigten Carbonsäuren und den Estern davon oder ethylenisch ungesättigten Dicarbonsäureanhydriden aufgebaut. Die Zusammensetzung ist zur Herstellung von formaldehydfreien Beschichtungen von Holzsubstraten brauchbar.

Die EP-A 576 128 beschreibt repulpierbare Klebstoffzusammensetzungen, die eine säurereiche Polymerkomponente und eine säurearme Polymerkomponente enthalten. Die säurearme Polymerkomponente basiert auf einem monomeren Gemisch von 40 bis 95 % eines Alkylacrylats oder -methacrylats und 5 bis 60 % einer ethylenisch ungesättigten Säure, wie Acrylsäure oder Methacrylsäure. Die säurearme Polymerkomponente basiert auf einem Monomergemisch aus 90 bis 100 % eines Alkylacrylats oder Alkylmethacrylats und 0 bis 10 % einer ethylenisch ungesättigten Säure. Die Herstellung der Zusammensetzung erfolgt durch wässrige Emulsionspolymerisation, wobei die säurereiche Polymerkomponente in Anwesenheit der säurearmen Polymerkomponente oder umgekehrt polymerisiert wird. Der pH der Zusammensetzung wird durch Zugabe von Ammoniumhydroxid oder Natriumhydroxid auf den gewünschten Wert eingestellt. Die Zusammensetzung ist als druckempfindlicher Klebstoff, Laminationsklebstoff, Klebstoff für textile Gewebe, Fliesen und Verpackungen und als Holzleim brauchbar.

Die US 5,314,943 beschreibt eine niedrigviskose, rasch härtende, formaldehydfreie Bindemittelzusammensetzung für Textilmaterialien. Die Zusammensetzung umfasst einen Latex, bei dem es sich um ein Copolymer auf Basis einer vinylaromatischen Verbindung und eines konjugierten Diens handelt, und ein wasserlösliches Copolymer, welches durch Copolymerisation eines Gemisches aus wenigstens einer ethylenisch ungesättigten Polycarbonsäure und wenigstens einer olefinischen ungesättigten Monocarbonsäure erhalten wird.

Die US 4,868,016 beschreibt eine Zusammensetzung auf Basis von wenigstens einem thermoplastischen, in wässrigem alkalischem Medium unlöslichen Latexpolymer und wenigstens einem alkalilöslichen Polymer, das mit dem Latexpolymer nicht kompatibel ist. Das Latexpolymer ist ein in Wasser dispergiertes Polymer, das aus Acrylsäure- oder Methacrylsäureestern, vinylaromatischen Verbindungen und Vinylestern aufgebaut sein kann und zusätzlich 0,5 bis 3 Gew.-% einer ethylenisch ungesättigten Carbonsäure einpolymerisiert enthält. Auch das alkalilösliche Polymer ist aus den genannten Monomeren aufgebaut, enthält jedoch 10 bis 60 Gew.-% einer ethylenisch ungesättigten Carbonsäure. Sie ist dazu brauchbar, Substrate mit einem Überzug zu versehen.

Es ist bekannt, dass stabile wässrige (Meth)acrylatdispersionen durch Emulsionspolymerisation in Anwesenheit von Schutzkolloiden nur dann erhalten werden, wenn wenigstens 50 % Vinylacetat, bezogen auf Gesamtmonomere, einpolymerisiert werden. Bei weniger als 50 % Vinylacetat erfolgt Agglomeration. Die US 4,670,505 beschreibt zur Lösung dieses Problems eine Polyacrylatdispersion, die durch Emulsionspolymerisation in Anwesenheit von 0,1 bis 5 Gew.-% wenigstens eines wasserlöslichen Aminoalkohols mit 2 bis 36 Kohlenstoffatomen und 0,04 bis 5 Gew.-%, jeweils bezogen auf Gesamtmonomere, eines Schutzkolloids hergestellt wird.

Aus der EP-A 537 910 sind Gemische von Emulsionspolymerisaten, die vorzugsweise aus Styrol und n-Butylacrylat aufgebaut sind, mit säurereichen wasserlöslichen Polymerisaten bekannt, die bei der Verwendung als Bindemittel für Anstriche zu Beschichtungen mit guter Substratbenetzung und hoher Lösemittelbeständigkeit führen sollen.

Aus der US 5,143,582 ist die Herstellung hitzebeständiger Vliesmaterialien unter Verwendung eines thermische aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Die DE-A 197 29 161 beschreibt thermisch härtbare wässrige Polymerdispersionen (Polymerisat 1), hergestellt in Gegenwart eines carboxylgruppenhaltigen Polymerisats (Polymerisat 2) und eines oberflächenaktiven Amins. Zusätzlich können die Dispersionen optional noch ein Alkanolamin mit mindestens zwei Hydroxylgruppen enthalten. Die Herstellung einer Polymerdispersion auf Basis eines Polymerisates 1 durch Polymerisation in Gegenwart eines Polymerisates 2, welches ein Umsetzungsprodukt aus einem ethylenisch ungesättigten Carbonsäureanhydrid und mindestens einem alkoxylierten Alkylamin eingebaut enthält, wird in diesem Dokument nicht beschrieben. Bei der Verwendung der Zusammensetzungen gemäß der DE-A-197 29 161 als thermisch härtbares Bindemittel für faserige und körnige Substrate ist deren niedrige Viskosität bei hohem Feststoffgehalt vorteilhaft. Es werden Formteile mit guter mechanischer Festigkeit erhalten, deren Formbeständigkeit im Feuchtklima jedoch noch verbesserungswürdig ist. Darüber hinaus ist die kolloidale Stabilität dieser Polymerdispersionen sehr gering, bei Verdünnung mit Wasser wird häufig bereits eine Agglomeration bzw. Koagulation beobachtet.

Die deutsche Patentanmeldung DE-A 199 00 459 offenbart eine ähnliche Polymerdispersion, wobei die dispergierten Polymerisatteilchen jedoch einen höheren Gehalt an $\alpha,\beta$-ethylenisch ungesättigten Carbonsäuren besitzen.

Die deutsche Patentanmeldung DE-A 199 00 460 offenbart eine Polymerdispersion, enthaltend i) in einem wässrigen Medium dispergierte Polymerpartikel aus Einheiten ethylenisch ungesättigter Monomere, ii) einen wasserlöslichen polymeren Polyelektrolyten, der entlang eines polymeren Gerüstes eine Vielzahl ionischer Gruppen einheitlichen Ladungscharakters oder hierzu ionisierbarer Gruppen trägt, und iii) ein ionisches Tensid, das eine ionische Gruppe mit zu dem polymeren Polyelektrolyten entgegengesetztem Ladungscharakter oder eine hierzu ionisierbare Gruppe trägt. Der Polyelektrolyt ist bevorzugt aus Einheiten ethylenisch ungesättigter Monomere, beispielsweise ethylenisch ungesättigten Mono- oder Dicarbonsäuren und Einheiten N-substituierter Amide derartiger Säuren, aufgebaut, wobei keine alkoxylierten Amide offenbart sind. Die Polymerdispersion kann durch einfaches Verdünnen mit Wasser koaguliert werden.

In der unveröffentlichten deutschen Patentanmeldung mit dem Aktenzeichen

DE 10 2006 001 979.2 wird die Verwendung einer wässrigen Polymerzusammensetzung, enthaltend eine Polysäure und ein Epoxy- oder Hydroxyalkylgruppen funktionalisiertes Polymerisat, zur Imprägnierung von Rohpapier offenbart. Eine Verwendung der wässrigen Polymerzusammensetzung für andere Anwendungen findet sich jedoch nicht.

Aufgabe der vorliegenden Erfindung war es, ein alternatives formaldehydfreies Bindemittelsystem für faserförmige oder körnige Substrate zur Verfügung zu stellen. Demgemäß wurde die eingangs definierte Verwendung gefunden.

Erfindungsgemäß wird eine wässrige Polymerzusammensetzung verwendet, welche durch radikalische initiierte Emulsionspolymerisation eines Monomerengemisches M in einem wässrigen Medium in Gegenwart eines Polymers A, wobei das Polymer A aus

a) 80 bis 100 Gew.-% wenigstens einer ethylenisch ungesättigten Mono- und/oder Dicarbonsäure [Monomere A1] und

b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei das Monomerengemisch M zusammengesetzt ist aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und

ii) 90 bis 99,99 Gew.-% wengistens eines weiteren ethylenisch ungesättigten Monomeren M2, welches sich von den Monomeren M1 unterscheidet,

und wobei als Monomere M2 solche Monomerenmischungen eingesetzt werden, welche zu

- 0,1 bis 5 Gew.-% wenigstens eine 3 bis 6 C-Atome aufweisende $\alpha,\beta$-monoethylenisch ungesättigte Mono-und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanalen, oder
- 0,1 bis 5 Gew.-% wenigstens eine 3 bis 6 C-Atome aufweisende a,$\beta$-monoethylenisch ungesättigte Mono-und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende a,$\beta$-monoethylenisch ungesättigte Monoundloder Dicarbonsäure undloder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende a,$\beta$-monoethylenisch ungesättigte Mono-und/oder Dicarbonsäure und/oder deren Amid und
- 40 bis 99,9 Gew.-% Vinylacetat, Vinylpropionat und/oder Ethylen enthalten. erhältlich ist.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert. Die Herstellung der erfindungsgemäß vorliegenden wässrigen Polymerzusammensetzung unterscheidet sich vom bekannten Stand der Technik dadurch, dass eine spezifische Monomerenmischung M in Anwesenheit eines spezifischen Polymers A radikalisch polymerisiert wird.

Zur Herstellung der wässrigen Polymerzusammensetzung wird Wasser, bevorzugt Trinkwasser und insbesondere bevorzugt entionisiertes Wasser verwendet, dessen Gesamtmenge so bemessen wird, dass sie 30 bis 90 Gew.-% und vorteilhaft 40 bis 60 Gew.-%, jeweils bezogen auf die wässrige Polymerzusammensetzung, beträgt.

Erfindungsgemäß wird ein Polymer A eingesetzt, welches aus

a) 80 bis 100 Gew.-% wenigstens einer ethylenisch ungesättigten Mono- und/oder Dicarbonsäure [Monomere A1] und

b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist.

Als Monomere A1 kommen insbesondere 3 bis 6 C-Atome aufweisende $\alpha,\beta$-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure insbesondere bevorzugt ist.

Zur Herstellung des erfindungsgemäß eingesetzten Polymers A kommt als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden a,$\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von > 50 Gew.-%, bevorzugt > 80 Gew.-% und insbesondere bevorzugt > 90 Gew.-% auf sich vereinen oder sogar die Gesamtmenge der Monomeren A2 bilden. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A2 lediglich als modifizierende Monomere in Mengen von $\leq$ 10 Gew.-%, bevorzugt $\leq$ 5 Gew.-% und insbesondere bevorzugt $\leq$ 3 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen

die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymers A eingesetzt.

Vorteilhaft werden zur Herstellung des Polymers A als Monomere A2 solche Monomerenmischungen eingesetzt, welche zu

- 50 bis 100 Gew.-% Ester der Acryl- und/oder Methacrylsäure mit 1 bis 12 C-Atome aufweisenden Alkanolen, oder
- 50 bis 100 Gew.-% Styrol und/oder Butadien, oder
- 50 bis 100 Gew.-% Vinylchlorid und/oder Vinylidenchlorid, oder
- 40 bis 100 Gew.-% Vinylacetat, Vinylpropionat und/oder Ethylen

enthalten.

Erfindungsgemäß vorteilhaft beträgt der einpolymerisierte Anteil an Monomeren A2 im Polymer A ≤ 10 Gew.-% oder ≤ 5 Gew.-%. Insbesondere vorteilhaft enthält das Polymer A keinerlei Monomeren A2 einpolymerisiert.

Die Herstellung von Polymeren A ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988). Vorteilhaft weist Polymer A ein gewichtsmittleres Molekulargewicht ≥ 1000 g/mol und ≤ 100000 g/mol auf. Günstig ist es, wenn das gewichtsmittlere Molekulargewicht von Polymer A ≤ 50000 g/mol oder ≤ 30000 g/mol ist. Insbesondere vorteilhaft weist Polymer A ein gewichtsmittleres Molekulargewicht ≥ 3000 g/mol und ≤ 20000 g/mol auf. Die Einstellung des gewichtsmittleren Molekulargewichts bei der Herstellung von Polymer A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatograpie.

Bei der Herstellung der wässrigen Polymerzusammensetzung ist es erfindungsgemäß möglich, gegebenenfalls eine Teil- oder die Gesamtmenge an Polymer A im Polymerisationsgefäß vorzulegen. Es ist aber auch möglich, die Gesamtmenge oder die gegebenenfalls verbliebene Restmenge an Polymer A während der Polymerisationsreaktion zuzudosieren. Die Gesamtmenge oder die gegebenenfalls verbliebene Restmenge an Polymer A kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft wird wenigstens eine Teilmenge an Polymer A vor Auslösung der Polymerisationsreaktion im Polymerisationsgefäß vorgelegt.

Für die Herstellung der wässrigen Polymerzusammensetzung ist es dabei unerheblich, ob Polymer A "in-situ" vor der Polymerisation des Monomerengemisches M im Polymerisationsgefäß hergestellt oder direkt als am Markt erhältliches bzw. separat hergestelltes Polymer eingesetzt wird.

Im Rahmen des erfindungsgemäßen Verfahrens zur Herstellung der wässrigen Polymerzusammensetzung werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

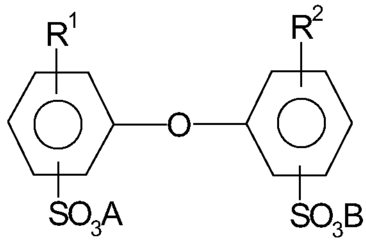

(I),

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z. B. aus US-A 4,269,749, und im Handel erhältlich.

Bevorzugt werden für das erfindungsgemäße Verfahren nichtionische und/oder anionische Emulgatoren verwendet.

In der Regel beträgt die Menge an zusätzlich eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Das erfindungsgemäß eingesetzte Monomerengemisch M setzt sich zusammen aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und

ii) 90 bis 99,99 Gew.-% wengistens eines weiteren ethylenisch ungesättigten Monomeren M2, welches sich von den Monomeren M1 unterscheidet.

Als Monomere M1 kommen insbesondere Glycidylacrylat und/oder Glycidylmethacrylat sowie Hydroxyalkylacrylate und -methacrylate mit C2- bis C10-Hydroxyalkylgruppen, insbesondere C2- bis C4-Hydroxyalkylgruppen und bevorzugt C2- und C3-Hydroxyalkylgruppen. Beispielhaft genannt seien 2-Hydroxyethylacrylat, 2-Hydroxyethylmethacrylat, 3-Hydroxypropylacrylat, 3-Hydroxypropylmethacrylat, 4-Hydroxybutylacrylat und/oder 4-Hydroxybutylmethacrylat. Mit besonderem Vorteil wird jedoch Glycidylacrylat und/oder Glycidylmethacrylat als Monomer M1 eingesetzt, wobei Glycidylmethacrylat insbesondere bevorzugt ist.

Erfindungsgemäß ist es möglich, gegebenenfalls eine Teil- oder die Gesamtmenge an Monomeren M1 im Polymerisationsgefäß vorzulegen. Es ist aber auch möglich, die Gesamtmenge oder die gegebenenfalls verbliebene Restmenge an Monomeren M1 während der Polymerisationsreaktion zuzudosieren. Die Gesamtmenge oder die gegebenenfalls verbliebene Restmenge an Monomeren M1 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M1 während der Polymerisationsreaktion kontinuierlich mit gleichbleibenden Mengenströmen, insbesondere als Bestandteil einer wässrigen Monomerenemulsion.

Zur Herstellung der erfindungsgemäßen wässrigen Polymerzusammensetzungen kommt als wenigstens ein Monomer M2 insbesondere in einfacher Weise mit Monomer M1 radikalisch copolymerisierbare ethylenisch ungesättigte Verbindungen in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, - nonyl-, -decyl- und -2-ethylhexylester, Fumar- und Maleinsäuredimethylester oder -din-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren M2, einen Anteil von $\geq$ 50 Gew.-%, bevorzugt > 80 Gew.-% und insbesondere > 90 Gew.-% auf sich vereinen. In aller Regel weisen diese Monomeren in Wasser bei Normalbedingungen [20 °C, 1 atm (absolut)] lediglich eine mäßige bis geringe Löslichkeit auf.

Monomere M2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende $\alpha,\beta$-monoethylenisch ungesättigte Mono- und Dicarbonsäuren und deren Amide, wie z. B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren M2 lediglich als modifizierende Monomere in Mengen von $\leq$ 10 Gew.-%, bevorzugt $\leq$ 5 Gew.-% und insbesondere bevorzugt $\leq$ 3 Gew.-%, bezogen auf die Gesamtmenge an Monomeren M2, enthalten.

Monomere M2, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren M2 in Mengen von $\leq$ 10 zu Gew.-%, bevorzugt in Mengen von $\leq$ 5 Gew.-% und insbesondere bevorzugt in Mengen von $\leq$ 3 Gew.-%, jeweils bezogen auf die Gesamtmenge an Monomeren A2, eingesetzt. Häufig werden jedoch keinerlei derartige vernetzende Monomeren M2 verwendet. Als Monomere M2 werden erfindungsgemäß solche Monomerenmischungen eingesetzt, welche zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und

- 50 bis 99,9 Gew.-% wenigstens ein Ester der Acryl- und/oder Methacrylsäure mit 1 bis 12 C-Atome aufweisenden Alkanolen, oder

- 0,1 bis 5 Gew.-% wenigstens eine 3 bis 6 C-Atome aufweisende $\alpha,\beta$-monoethylenisch ungesättigte Mono- und/oder Dicar bonsäure und/oder deren Amid und
  50 bis 99,9 Gew.-% Styrol und/oder Butadien, oder

- 0,1 bis 5 Gew.-% wenigstens eine 3 bis 6 C-Atome aufweisende $\alpha,\beta$-monoethylenisch ungesättigte Mono- und/oder Dicar bonsäure und/oder deren Amid und
  50 bis 99,9 Gew.-% Vinylchlorid und/oder Vinylidenchlorid, oder

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  40 bis 99,9 Gew.-% Vinylacetat, Vinylpropionat und/oder Ethylen

enthalten.

Erfindungsgemäß ist es möglich, gegebenenfalls eine Teil- oder die Gesamtmenge an Monomeren M2 im Polymerisationsgefäß vorzulegen. Es ist aber auch möglich, die Gesamtmenge oder die gegebenenfalls verbliebene Restmenge an Monomeren M2 während der Polymerisationsreaktion zuzudosieren. Die Gesamtmenge oder die gegebenenfalls verbliebene Restmenge an Monomeren M2 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M2 während der Polymerisationsreaktion kontinuierlich mit gleichbleibenden Mengenströmen, insbesondere als Bestandteil einer wässrigen Monomerenemulsion.

Mit Vorteil werden die Monomeren M1 und M2 gemeinsam als Monomerengemisch M in Form einer wässrigen Monomerenemulsion eingesetzt.

Erfindungsgemäß vorteilhaft werden Monomerengemische M eingesetzt, deren Gesamtmenge an Monomeren M1 0,1 Gew.-% bis 5 Gew.-% und insbesondere 0,5 Gew.-% bis 3 Gew.-% und dementsprechend die Gesamtmenge an Monomeren M2 95 Gew.-% bis 99,9 Gew.-% und insbesondere 97 Gew.-% bis 99,5 Gew.-%, beträgt.

Die Auslösung der radikalisch initiierten Polymerisationsreaktion erfolgt mittels eines dem Fachmann für die wässrige Emulsionspolymeriation geläufigen radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und DiNatrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmenge des Monomerengemisches M, 0,01 bis 5 Gew.-%, bevorzugt 0,1 bis 3 Gew.-% und insbesondere bevorzugt 0,2 bis 1,5 Gew.-%.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer wässrigen Lösung des Radikalinitiators.

Die Polymerisationsreaktion erfolgt dabei unter Temperatur- und Druckbedingungen, unter denen die radikalisch initiierte wässrige Emulsionspolymerisation mit ausreichender Polymerisationsgeschwindigkeit verläuft; sie ist dabei insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist.

Abhängig vom gewählten Radikalinitiator kommt als Reaktionstemperatur für die erfindungsgemäße radikalische initiierte Polymerisationsreaktion des Monomerengemisches M der gesamte Bereich von 0 bis 170 °C in Betracht. Dabei werden in der Regel Temperaturen von 50 bis 120 °C, insbesondere 60 bis 110 °C und vorteilhaft 70 bis 100 °C angewendet. Die erfindungsgemäße radikalische initiierte Polymerisationsreaktion kann bei einem Druck kleiner, gleich oder größer 1 atm (1,01 bar absolut) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird die erfindungsgemäße radikalische initiierte Polymerisation bei 1 atm (absolut) unter Inertgasatmosphäre, wie beispielsweise unter Stickstoff oder Argon durchgeführt.

In der Regel erfolgt das erfindungsgemäße Verfahren vorteilhaft dergestalt, dass in einem Polymerisationsgefäß bei 20 bis 25 °C (Raumtemperatur) und Atmosphärendruck unter Inertgasatmospäre wenigstens eine Teilmenge des verwendeten entionisierten Wassers, gegebenenfalls eine Teilmenge des Radikalinitiators und des Monomerengemisches M und die Gesamtmenge an Polymer A vorgelegt werden, daran anschließend das Vorlagengemisch unter Rühren auf die geeignete Polymerisationstemperatur aufgeheizt wird und danach die gegebenenfalls verbliebene Restmenge oder die Gesamtmenge an Radikalinitiator und Monomerenmischung M dem Polymerisationsgemisch zudosiert werden.

Erfindungsgemäß vorteilhaft beträgt das Gewichtsverhältnis von Polymer A zu Monomerengemisch M (fest/fest) 10:90 bis 90:10, insbesondere vorteilhaft 20:80 bis 80:20 und mit besonderem Vorteil 40:60 bis 60:40.

Das wässrige Reaktionsmedium kann prinzipiell auch noch geringe Mengen an wasserlöslichen organischen Lösungsmitteln, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Durch gezielte Variation von Art und Menge der Monomeren M1 und M2 ist es dem Fachmann erfindungsgemäß möglich, wässrige Polymerzusammensetzungen herzustellen, deren Polymere M eine Glasübergangstemperatur bzw. einen Schmelzpunkt im Bereich von -60 bis 270 °C aufweisen. Als Glasübergangstemperatur bzw. Schmelzpunkt des Polymeren M soll dabei im Rahmen dieser Schrift diejenige Glasübergangstemperatur bzw. derjenige Schmelzpunkt verstanden werden, welche(n) das bei alleiniger Polymerisation des Monomerengemisches M, d.h. Polymerisation in Abwesenheit des Polymeren A, erhaltene Polymere aufweisen würde. Erfindungsgemäß vorteilhaft beträgt die Glasübergangstemperatur des Polymeren M $\geq$ -20 °C bis $\leq$ 105 °C und bevorzugt $\geq$ 20 °C bis $\leq$ 100 °C.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ull-mann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die nach dem erfindungsgemäßen Verfahren zugänglichen wässrigen Polymerzusammensetzungen weisen oft Polymerzusammensetzungen (entsprechend Polymer A, Polymer M sowie mit Polymer M gepfropftes Polymer A) auf, deren Mindestfilmbildetemperatur MFT $\geq$ 10 °C bis $\leq$ 70 °C häufig $\geq$ 20 °C bis $\leq$ 60 °C oder bevorzugt $\geq$ 25 °C bis $\leq$ 50 °C beträgt. Da die MFT unterhalb 0 °C nicht mehr messbar ist, kann die untere Grenze der MFT nur durch die Tg-Werte angegeben werden. Die Bestimmung der MFT erfolgt nach DIN 53787.

Die erfindungsgemäß erhaltenen wässrigen Polymerzusammensetzungen weisen üblicherweise Polymerfeststoffgehalte (Summe aus Gesamtmenge an Polymer A und Gesamtmenge an Monomerenmischung M) von $\geq$ 10 und $\leq$ 70 Gew.-%, häufig $\geq$ 20 und $\leq$ 65 Gew.-% und oft $\geq$ 40 und $\leq$ 60 Gew.-%, jeweils bezogen auf die wässrige Polymerzusammensetzung, auf. Der über quasielastische Lichtstreuung (ISO-Norm 13321) ermittelte zahlenmittlere Teilchendurchmesser (cumulant z-average) liegt in der Regel zwischen 10 und 2000 nm, häufig zwischen 20 und 1000 nm und oft zwischen 50 und 700 nm bzw. 80 bis 400 nm.

Erfindungsgemäß können bei der Herstellung der wässrigen Polymerzusammensetzung auch weitere, dem

Fachmann geläufige optionale Hilfsstoffe, wie beispielsweise sogenannte Verdicker, Entschäumer, Neutralisationsmittel, Puffersubstanzen, Konservierungsmittel, radikalkettenübertragende Verbindungen und/oder anorganische Füllstoffe eingesetzt werden.

Die nach vorgenanntem Verfahren hergestellte wässrige Polymerzusammensetzung eignet sich insbesondere als Bindemittel für faserförmige und körnige Substrate. Mit Vorteil lassen sich die wässrigen Polymerzusammensetzungen als Bindemittel bei der Herstellung von Formkörpern aus faserförmigen und körnigen Substraten einsetzen.

Faserförmige und körnige Substrate sind dem Fachmann geläufig. Beispielsweise handelt es sich hierbei um Holzschnitzel, Holzfasern, Textilfasern, Glasfasern, Mineralfasern oder Naturfasern wie Jute, Flachs, Hanf oder Sisal, aber auch Korkschnitzel oder Sand. Selbstverständlich soll der Begriff Substrat auch die aus den genannten Fasern erhältlichen Faservliese, beispielsweise sogenannte genadelte Faservliese mit umfassen. Insbesondere vorteilhaft ist die erfindungsgemäße wässrige Polymerzusammensetzung als formaldehydfreies Bindemittelsystem für vorgenannte Naturfasern bzw. daraus gebildete Faservliese geeignet.

Das Verfahren zur Herstellung eines Formkörpers aus einem faserförmigen oder körnigen Substrat mit einer wässrigen Polymerzusammensetzung, erfolgt dergestalt, dass das faserförmige oder körnige Substrat mit einer wässrigen Polymerzusammensetzung, welche erhältlich ist durch radikalische initiierte Emulsionspolymerisation eines Monomerengemisches M in einem wässrigen Medium in Gegenwart eines Polymers A, wobei das Polymer A aus

a) 80 bis 100 Gew.-% wenigstens einer ethylenisch ungesättigten Mono- und/oder Dicarbonsäure [Monomere A1] und
b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei das Monomerengemisch M zusammengesetzt ist aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
ii) 90 bis 99,99 Gew.-% wengistens eines weiteren ethylenisch ungesättigten Monomeren M2, welches sich von den Monomeren M1 unterscheidet,

und wobei als Monomere M2 solche Monomerenmischungen eingesetzt werden, welche zu

- 0,1 bis 5 Gew.-% wenigstens eine 3 bis 6 C-Atome aufweisende $\alpha,\beta$-monoethylenisch ungesättigte Mono-und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanalen, oder
- 0,1 bis 5 Gew.-% wenigstens eine 3 bis 6 C-Atome aufweisende a,$\beta$-monoethylenisch ungesättigte Mono-und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende a,$\beta$-monoethylenisch ungesättigte Monoundloder Dicarbonsäure undloder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende a,$\beta$-monoethylenisch ungesättigte Mono-und/oder Dicarbonsäure und/oder deren Amid und
- 40 bis 99,9 Gew.-% Vinylacetat, Vinylpropionat und/oder Ethylen enthalten,

zuerst imprägniert, das imprägnierte faserförmige oder körnige Substrat dann in die gewünscht Form gebracht und diese Form daran anschließend getrocknet bzw. ausgehärtet wird.

Die Imprägnierung der faserförmigen und körnigen Substrate erfolgt in der Regel dergestalt, dass die erfindungsgemäße wässrige Polymerzusammensetzung gleichmäßig auf die Oberfläche der faserförmigen und körnigen Substrate aufgebracht wird. Dabei wird die Menge an wässriger Polymerzusammensetzung so gewählt, dass pro 100 g Substrat $\geq$ 1 g und $\leq$ 100 g, bevorzugt $\geq$ 5 g und $\leq$ 50 g und insbesondere bevorzugt $\geq$ 10 g und $\leq$ 30 g Polymerzusammensetzung, als Feststoff gerechnet, eingesetzt werden. Die Imprägnierung der faserförmigen und körnigen Substrate ist dem Fachmann geläufig und erfolgt beispielsweise durch Tränkung oder durch Besprühen der faserförmigen oder körnigen Substrate. Vorteilhaft erfolgt die Imprägnierung mit einer aufgeschäumten wässrigen Polymerzusammensetzung.

Nach der Imprägnierung wird das faserförmige oder körnige Substrat in die gewünscht Form gebracht, beispielsweise durch Einlegen in eine beheizbare Presse oder Form und diese daran anschließend in einer dem Fachmann geläufigen Art und Weise getrocknet bzw. ausgehärtet wird.

Häufig erfolgt die Trocknung der erhaltenen Form in zwei Trocknungsstufen, wobei die erste Trocknungsstufe bei einer Temperatur ≤ 150 °C, bevorzugt ≥ 20 °C und ≤ 130 °C und insbesondere bevorzugt ≥ 40 und ≤ 100 °C und die zweite Trocknungsstufe bei einer Temperatur ≥ 130 °C, bevorzugt ≥ 150 °C und ≤ 250 °C und insbesondere bevorzugt ≥ 180 °C und ≤ 220 °C erfolgt.

Die erste Trocknungsstufe erfolgt dabei vorteilhaft dergestalt, dass bei einer Temperatur ≤ 150 °C so lange getrocknet wird, bis der erhaltene Formkörper, welcher häufig noch nicht seine endgültige Form aufweist (sogenanntes Halbzeug) eine Restfeuchte ≤ 15 Gew.-%, bevorzugt ≤ 12 Gew.-% und insbesondere bevorzugt ≤ 10 Gew.-% aufweist. Dabei wird die Restfeuchte bestimmt, indem zuerst der erhaltene Formkörper bei Raumtemperatur gewogen, dieser daran anschließend für 2 Minuten auf 130 °C getrocknet und daran anschließend abgekühlt und wieder bei Raumtemperatur gewogen wird. Dabei entspricht die Restfeuchte der Gewichtsdifferenz des Formkörpers vor und nach dem Trocknungsvorgang, bezogen auf das Gewicht des Formkörpers vor dem Trocknungsvorgang multipliziert mit dem Faktor 100.

Das so erhaltene Halbzeug ist nach Erwärmen auf eine Temperatur > 100 noch verformbar und kann bei dieser Temperatur in die endgültige Form des gewünschten Formkörpers gebracht werden.

Die nachfolgende zweite Trocknungsstufe erfolgt vorteilhaft dergestalt, dass das Halbzeug bei einer Temperatur > 130 °C solange erhitzt wird, bis dieses eine Restfeuchte < 3 Gew.-%, bevorzugt < 1 Gew.-% und insbesondere bevorzugt < 0,5 Gew.-% aufweist, wobei das Bindemittel häufig in Folge einer chemischen Reaktion aushärtet.

Häufig erfolgt die Herstellung der Formkörper dadurch, dass das Halbzeug in einer Formpresse in den vorgenannten Temperaturbereichen in die endgültige Form gebracht und ausgehärtet wird.

Selbstverständlich ist es aber auch möglich, dass die erste (Trocknung) und die zweite Trocknungsstufe (Aushärtung) der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere ein verbessertes Durchbiegungs- und Biegespannungsverhalten im Vergleich zu den Formkörpern des Standes der Technik auf.

Die Erfindung soll anhand nachfolgender nicht einschränkender Beispiele erläutert werden.

Beispiele

A. Herstellung des Polymers A

In einen 4 l-Vierhalskolben, ausgerüstet mit einem Anker-Rührer, Rückflusskühler und zwei Dosiereinrichtungen, wurden bei Raumtemperatur unter Stickstoffatmosphäre 235 g Isopropanol, 42 g entionisiertes Wasser sowie 12,7 g einer 50 gew-%igen wässrigen Wasserstoffperoxid-Lösung vorgelegt. Daran anschließend wurde die Vorlagenlösung unter Rühren auf 85 °C aufgeheizt und zeitgleich beginnend Zulauf 1 innerhalb von 6 Stunden und Zulauf 2 innerhalb von 8 Stunden kontinuierlich mit gleichbleibenden Mengeströmen zudosiert. Daran anschließend destillierte man ca. 400 g eines Isopropanol/Wasser-Gemisches ab, fügte 200 g entionisiertes Wasser zu und destillierte solange Isopropanol/Wasser ab, bis eine Temperatur von 100 °C in der Polymerlösung erreicht wurde. Daran anschließend leitete man unter Beibehaltung der Temperatur für ca. 1 Stunde Wasserdampf durch die wässrige Polymerlösung.

Zulauf 1 bestehend aus:

| | |
|---|---|
| 48,6 g | entionisiertem Wasser |
| 650 g | Acrylsäure |
| 276 g | Isopropanol |

Zulauf 2 bestehend aus:

| | |
|---|---|
| 25,9 g | einer 50 gew.-%igen wässrigen Lösung von Wasserstoffperoxid |

Die so erhaltene wässrige Polymerlösung wies einen Feststoffgehalt von 50 Gew.-%, einen pH-Wert von 1,5 und eine Viskosität von 118 mPas auf. Das durch Gelpermeationchromatographie ermittelte gewichtsmittlere Molekulargewicht betrug 6600 g/mol, entsprechend einem K-Wert von 25,3.

Der Feststoffgehalt wurde generell bestimmt, indem eine Probe von ca. 1 g in einem Umluft-Trockenschrank für zwei Stunden bei 120 °C getrocknet wurde. Es wurden jeweils zwei separate Messungen durchgeführt. Die in den Beispielen angegebenen Werte stellen Mittelwerte der beiden Messergebnisse dar.

Die Viskosität wurde generell mit einem Rheomat der Fa. Physica bei einer Schergeschwindigkeit von 250 $s^{-1}$ gemäß DIN 53019 bei 23 °C bestimmt.

Der pH-Wert wurde mit einem handylab 1 pH-Meter der Fa. Schott bestimmt.

Der K-Wert des Polymers A wurde nach Fikentscher (ISO 1628-1) bestimmt.

Die Ermittlung des gewichtsmittleren Molekulargewichts des Polymers A erfolgte mittels Gelpermeationschromatographie (Linearsäule: Supremea M der Fa. PSS, Eluens: 0,08 mol/l TRIS-Puffer pH 7,0, entionisiertes Wasser, Flüssigkeitsstrom: 0,8 ml/min, Detektor: Differentialrefraktometer ERC 7510 der Fa. ERC).

Der mittlere Teilchendurchmesser der Polymerteilchen wurde durch dynamische Lichtstreuung an einer 0,005 bis 0,01 gewichtsprozentigen wässrigen Polymerdispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

B. Herstellung der wässrigen Polymerzusammensetzungen

Beispiel 1 (B1)

In einen 5 l-Vierhalskolben, ausgerüstet mit einem Anker-Rührer, Rückflusskühler und zwei Dosiereinrichtungen, wurden bei Raumtemperatur unter Stickstoffatmosphäre 202 g entionisiertes Wasser, 750 g der wässrigen Lösung des Polymers A sowie 18 g einer 50 gew.-%igen wässrigen Lösung von Natriumhydroxid vorgelegt. Daran anschließend wurde die Vorlagenlösung unter Rühren auf 90 °C aufgeheizt und 10,7 g von Zulauf 2 zugegeben. Nach 5 Minuten wurden zeitgleich beginnend Zuläufe 1 und 3 sowie die Restmenge von Zulauf 2 innerhalb von 2,5 Stunden kontinuierlich mit gleichbleibenden Mengeströmen zudosiert.

Zulauf 1 bestehend aus:

| | |
|---|---|
| 375 g | entionisiertem Wasser |
| 26,8 g | einer 28 gew.-%igen wässrigen Lösung eines Natriumlaurylethersulfats (Texapon® NSO der Fa. Cognis) |
| 22,5 g | Glycidylmethacrylat |
| 713 g | Styrol |
| 15,0 g | Acrylsäure |
| 25,0 g | Natriumpyrophosphat |

Zulauf 2 bestehend aus:

| | |
|---|---|
| 39,9 g | entionisiertem Wasser |
| 3,0 g | Natriumpersulfat |

Zulauf 3 bestehend aus:

| | |
|---|---|
| 75,0 g | entionisiertem Wasser |
| 750 g | der wässrigen Lösung des Polymers A |
| 18,0 g | einer 50 gew.-%igen wässrigen Lösung von Natriumhydroxid |

Nach der Beendigung der Zuläufe ließ man die wässrige Polymerzusammensetzung auf 75 °C abkühlen. Daran anschließend gab man der wässrigen Polymerzusammensetzung zur Restmonomerenentfernung zeitgleich beginnend 15,0 g einer 10 gew.-%igen wässrigen Lösung von tert.-Butylhydroperoxid und 18,3 g einer 13 gew.-%igen wässrigen Lösung von Acetondisulfit (molares Umsetzungsprodukt von Aceton mit Natriumhydrogensulfit (NaHSO3) innerhalb von 90 Minuten kontinuierlich mit gleichbleibenden Mengeströmen zu. Anschließend kühlte man die erhaltene wässrige Polymerzusammensetzung B1 auf Raumtemperatur ab. Daran anschließend wurde die wässrige Polymerzusammensetzung über ein 125 μm-Netz filtriert. Dadurch wurden etwa 0,01 g Koagulat entfernt.

Die erhaltene wässrige Polymerzusammensetzung B1 wies einen pH-Wert von 3,1 auf, der Feststoffgehalt betrug 49,9 Gew.-% und die Viskosität betrug 93 mPas. Die mittlere Teilchengröße wurde zu 204 nm bestimmt.

Beispiel 2 (B2)

In einen 5 l-Vierhalskolben, ausgerüstet mit einem Anker-Rührer, Rückflusskühler und zwei Dosiereinrichtungen, wurden bei Raumtemperatur unter Stickstoffatmosphäre 108 g entionisiertes Wasser, 400 g der wässrigen Lösung des Polymers A sowie 9,6 g einer 50 gew.-%igen wässrigen Lösung von Natriumhydroxid vorgelegt. Daran anschließend

wurde die Vorlagenlösung unter Rühren auf 90 °C aufgeheizt und 5,7 g von Zulauf 2 zugegeben. Nach 5 Minuten wurden zeitgleich beginnend Zuläufe 1 und 3 sowie die Restmenge von Zulauf 2 innerhalb von 2,5 Stunden kontinuierlich mit gleichbleibenden Mengeströmen zudosiert.

Zulauf 1 bestehend aus:

| | |
|---|---|
| 200 g | entionisiertem Wasser |
| 14,3 g | einer 28 gew.-%igen wässrigen Lösung von Texapon® NSO |
| 12,0 g | Glycidylmethacrylat |
| 208 g | Styrol |
| 172 g | n-Butylacrylat |
| 15,0 g | Acrylsäure |
| 13,3 g | Natriumpyrophosphat |

Zulauf 2 bestehend aus:

| | |
|---|---|
| 21,3 g | entionisiertem Wasser |
| 1,6 g | Natriumpersulfat |

Zulauf 3 bestehend aus:

| | |
|---|---|
| 40,0 g | entionisiertem Wasser |
| 1467 g | der wässrigen Lösung des Polymers A |
| 35,2 g | einer 50 gew.-%igen wässrigen Lösung von Natriumhydroxid |

Nach der Beendigung der Zuläufe ließ man die wässrige Polymerzusammensetzung auf 75 °C abkühlen. Daran anschließend gab man der wässrigen Polymerzusammensetzung zur Restmonomerenentfernung zeitgleich beginnend 8,0 g einer 10 gew.-%igen wässrigen Lösung von tert.-Butylhydroperoxid und 9,7 g einer 13 gew.-%igen wässrigen Lösung von Acetondisulfit innerhalb von 90 Minuten kontinuierlich mit gleichbleibenden Mengeströmen zu. Anschließend kühlte man die erhaltene wässrige Polymerzusammensetzung B2 auf Raumtemperatur ab. Daran anschließend wurde die wässrige Polymerzusammensetzung über ein 125 μm-Netz filtriert. Dadurch wurden etwa 0,2 g Koagulat entfernt.

Die erhaltene wässrige Polymerzusammensetzung B2 wies einen pH-Wert von 3,1 auf, der Feststoffgehalt betrug 49,5 Gew.-% und die Viskosität betrug 72 mPas. Die mittlere Teilchengröße wurde zu 230 nm bestimmt.

Vergleichsbeispiel 1 (V1)

500 g der wässrigen Lösung von Polymer A wurden unter Rühren mit 75 g Triethanolamin homogen gemischt.

Vergleichsbeispiel 2 (V2)

In einen 2 l-Vierhalskolben, ausgerüstet mit einem Anker-Rührer, Rückflusskühler und zwei Dosiereinrichtungen, wurden bei Raumtemperatur unter Stickstoffatmosphäre 175,6 g entionisiertes Wasser vorgelegt. Daran anschließend wurde die Vorlage unter Rühren auf 90 °C aufgeheizt und zuerst 63,5 g von Zulauf 1 und dann 5,7 g von Zulauf 2 zugegeben. Nach 5 Minuten wurden zeitgleich beginnend die Restmengen der Zuläufe 1 und 2 innerhalb von 2,5 Stunden kontinuierlich mit gleichbleibenden Mengeströmen zudosiert.

Zulauf 1 bestehend aus:

| | |
|---|---|
| 200 g | entionisiertem Wasser |
| 14,3 g | einer 28 gew.-%igen wässrigen Lösung von Texapon® NSO |
| 12,0 g | Glycidylmethacrylat |
| 208 g | Styrol |
| 172 g | n-Butylacrylat |
| 15,0 g | Acrylsäure |
| 13,3 g | Natriumpyrophosphat |

Zulauf 2 bestehend aus:

| | |
|---|---|
| 21,3 g | entionisiertem Wasser |
| 1,6 g | Natriumpersulfat |

Nach der Beendigung der Zuläufe ließ man die wässrige Polymerzusammensetzung auf 75 °C abkühlen. Daran anschließend gab man der wässrigen Polymerzusammensetzung zur Restmonomerenentfernung zeitgleich beginnend 8,0 g einer 10 gew.-%igen wässrigen Lösung von tert.-Butylhydroperoxid und 9,7 g einer 13 gew.-%igen wässrigen Lösung von Acetondisulfit innerhalb von 90 Minuten kontinuierlich mit gleichbleibenden Mengeströmen zu. Anschließend kühlte man die erhaltene wässrige Polymerzusammensetzung V2 auf Raumtemperatur ab. Daran anschließend wurde die wässrige Polymerzusammensetzung über ein 125 μm-Netz filtriert. Dadurch wurden etwa 0,5 g Koagulat entfernt.

Die erhaltene wässrige Polymerzusammensetzung V2 wies einen pH-Wert von 2,1 auf, der Feststoffgehalt betrug 50,3 Gew.-% und die Viskosität betrug 58 mPas. Die mittlere Teilchengröße wurde zu 195 nm bestimmt.

C. Anwendungstechnische Untersuchungen

Es wurden genadelte Fasermatten der Größe 30 x 30 cm (Hanf und Flachs im Gewichtsverhältnis 1:1) mit einem Flächengewicht von 1050 g/$m^2$ der Fa. Dittrich GmbH, Kaiserslautern eingesetzt.

Die in den Beispielen und Vergleichsbeispielen erhaltenen wässrigen Polymerzusammensetzungen B1 und B2 sowie V1 und V2 wurden mit einem Labormixer durch Luftbeladung aufgeschäumt (Schaumdichte von 300 bis 460 g/l). Anschließend wurden die Fasermatten mit den aufgeschäumten wässrigen Polymerzusammensetzungen mit einem Walzenstuhl (Foulard) imprägniert. Über Schaumdichte und Anpressdruck der Walzen konnte eine vollständige Durchtränkung der Naturfasermatten erreicht werden. Der Gehalt an wässriger Polymerzusammensetzung (als Feststoff gerechnet) wurde so eingestellt, dass er 263 g/$m^2$ betrug, entsprechend 25 Gew.-%, bezogen auf das Gewicht der nicht imprägnierten Fasermatte.

Ohne weitere Trocknung wurden die imprägnierten Fasermatten in einer Heißpresse bei 200 °C auf eine Dicke von 1,8 mm verpresst. Dabei erfolgte die Pressung dergestalt, dass die imprägnierte Fasermatte 15 Sekunden gepresst wurde, die Presse anschließend für 10 Sekunden zur Entlüftung geöffnet wurde und danach weitere 45 Sekunden gepresst wurde. Nach dem Abkühlen wurden Prüfkörper mit einer Größe von 50 x 280 mm bzw. 50 x 140 mm in Faserlängsrichtung geschnitten. Die erhaltenen Prüfkörper wurden anschließend für 24 Stunden bei 23 °C und 50 % relativer Luftfeuchtigkeit im Klimaraum gelagert. Die in Abhängigkeit von der verwendeten Polymerzusammensetzung erhaltenen Fasermatten werden im folgenden imprägnierte Fasermatten B1, B2, V1 sowie V2 bezeichnet.

Bestimmung der Wärmeformbeständigkeit

Bei dieser Messung wurden Prüfkörper der Größe 50 x 280 mm im Klimaschrank bei 80 °C und 90 % relativer Luftfeuchtigkeit 24 Stunden gelagert. Anschließend wurde die Durchbiegung der mit einem Auflageabstand von 250 mm gelagerten Prüfkörper bestimmt. Die Ergebnisse sind in Tabelle 1 aufgelistet. Dabei sind die Prüfergebnisse um so besser zu bewerten, je geringer die Durchbiegung ausfällt.

Bestimmung der Biegespannung (DIN EN ISO 14125)

Die Bestimmung der Biegespannung erfolgte anhand von 3-Punkt-Biegeversuchen an 50 x 140 mm großen Prüfkörpern. Der Abstand des Widerlagers betrug bei dieser Messung 90 mm. Insgesamt erfolgten jeweils 4 Messung an 4 Prüfkörpern. Die in Tabelle 1 aufgelisteten Biegespannungswerte stellen die Mittelwerte aus diesen 4 Messungen dar. Dabei sind die Prüfergebnisse um so besser zu bewerten, je höher die erhaltenen Biegespannungswerte sind.

Tabelle 1: Zusammenfassung der Ergebnisse

| Imprägnierte Fasermatte | Durchbiegung Nach 24 Stunden [mm] | Biegespannung [N/$mm^2$] |
|---|---|---|
| B1 | 17 | 48 |
| B2 | 27 | 38 |
| V1 | 60 | 21 |
| V2 | 60 | 5 |

Aus den Ergebnissen ist klar ersichtlich, dass die unter Verwendung der erfindungsgemäßen wässrigen Polymerzusammensetzungen erhaltenen Prüfkörper ein deutlich verbessertes Durchbiegungs- und Biegespannungsverhalten aufweisen.

**Patentansprüche**

1. Verwendung einer wässrigen Polymerzusammensetzung als Bindemittel für faserförmige oder körnige Substrate, wobei die wässrige Polymerzusammensetzung erhältlich ist durch radikalische initiierte Emulsionspolymerisation eines Monomerengemisches M in einem wässrigen Medium in Gegenwart eines Polymers A, wobei das Polymer A aus

   a) 80 bis 100 Gew.-% wenigstens einer ethylenisch ungesättigten Mono- und/oder Dicarbonsäure [Monomere A1] und
   b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

   und wobei das Monomerengemisch M zusammengesetzt ist aus

   i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
   ii) 90 bis 99,99 Gew.-% wengistens eines weiteren ethylenisch ungesättigten Monomeren M2, welches sich von den Monomeren M1 unterscheidet,
   und wobei als Monomere M2 solche Monomerenmischungen eingesetzt werden, welche zu

   - 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
   - 50 bis 99,9 Gew.-% wenigstens ein Ester der Acryl- und/oder Methacrylsäure mit 1 bis 12 C-Atome aufweisenden Alkanolen, oder
   - 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
   - 50 bis 99,9 Gew.-% Styrol und/oder Butadien, oder
   - 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
   - 50 bis 99,9 Gew.-% Vinylchlorid und/oder Vinylidenchlorid, oder
   - 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
   - 40 bis 99,9 Gew.-% Vinylacetat, Vinylpropionat und/oder Ethylen enthalten.

2. Verwendung nach Anspruch 1, wobei das Gewichtsverhältnis von Polymer A zu Monomerengemisch M 10:90 bis 90:10 beträgt.

3. Verwendung nach einem der Ansprüche 1 oder 2, wobei Polymer A zu 100 Gew.-% aus einer ethylenisch ungesättigten Monocarbonsäure aufgebaut ist.

4. Verwendung nach einem der Ansprüche 1 bis 3, wobei Acrylsäure für eine ethylenisch ungesättigte Monocarbonsäure steht.

5. Verwendung nach einem der Ansprüche 1 bis 4, wobei das Polymer A ein gewichtsmittleres Molekulargewicht > 3000 g/mol und $\leq$ 20000 g/mol aufweist, wobei das Molekulargewicht mit Gelpermeationschromatographie gemessen wird.

6. Verwendung nach einem der Ansprüche 1 bis 5, wobei die Monomeren M1 und M2 der Monomerenmischung M so ausgewählt werden, dass das durch Polymerisation der Monomerenmischung M erhaltene Polymere M eine Glasübergangstemperatur $\geq$ -20 °C und $\leq$ 105 °C aufweist, wobei die Glasübergangstemperatur nach dem DSC-Verfahren DIN 53765 ermittelt wird.

7. Verwendung nach einem der Ansprüche 1 bis 6, wobei das Monomere M1 ausgewählt ist unter Glycidylacrylat,

Glycidylmethacrylat, 2-Hydroxyethylacrylat, 2-Hydroxyethylmethacrylat, 3-Hydroxypropylacrylat, 3-Hydroxypropylmethacrylat, 4-Hydroxybutylacrylat und/oder 4-Hydroxybutylmethacrylat.

**8.** Verfahren zur Herstellung eines Formkörpers aus einem faserförmigen oder körnigen Substrat mit einer wässrigen Polymerzusammensetzung, **dadurch gekennzeichnet, dass** das faserförmige oder körnige Substrat mit einer wässrigen Polymerzusammensetzung, welche erhältlich ist durch radikalische initiierte Emulsionspolymerisation eines Monomerengemisches M in einem wässrigen Medium in Gegenwart eines Polymers A, wobei das Polymer A aus

a) 80 bis 100 Gew.-% wenigstens einer ethylenisch ungesättigten Mono- und/oder Dicarbonsäure [Monomere A1] und
b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist,

und wobei das Monomerengemisch M zusammengesetzt ist aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
ii) 90 bis 99,99 Gew.-% wengistens eines weiteren ethylenisch ungesättigten Monomeren M2, welches sich von den Monomeren M1 unterscheidet,
und wobei als Monomere M2 solche Monomerenmischungen eingesetzt werden, welche zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanolen, oder
- 0,1 bis 5 Gew.-% wenigstens eine 3 bis 6 C-Atome aufweisende a,$\beta$-monoethylenisch ungesättigte Mono- und/oder Dicarbonsäure und/oder deren Amid und
- 50 bis 99,9 Gew.-% Styrol und/oder Butadien, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 50 bis 99,9 Gew.-% Vinylchlorid und/oder Vinylidenchlorid, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
- 40 bis 99,9 Gew.-% Vinylacetat, Vinylpropionat und/oder Ethylen

enthalten,

zuerst imprägniert, das imprägnierte faserförmige oder körnige Substrat dann in die gewünscht Form gebracht und diese Form daran anschließend getrocknet wird.

**9.** Verfahren nach Anspruch 8, **dadurch gekennzeichnet, dass** die Monomeren M1 und M2 der Monomerenmischung M so ausgewählt werden, dass das durch Polymerisation der Monomerenmischung M erhaltene Polymere M eine Glasübergangstemperatur $\geq$ -20 °C und $\leq$ 105 °C aufweist, wobei die Glasübergangstemperatur nach dem DSC-Verfahren DIN 53765 ermittelt wird.

**10.** Verfahren nach Anspruch 8 oder 9, **dadurch gekennzeichnet, dass** die Menge an wässriger Polymerzusammensetzung so gewählt wird, dass pro 100 g faserförmiges oder körniges Substrat $\geq$ 1 g und $\leq$ 100 g Polymerzusammensetzung, als Feststoff gerechnet, eingesetzt werden.

**11.** Verfahren nach Anspruch 8 bis 10, **dadurch gekennzeichnet, dass** die Trocknung bei einer Temperatur > 20 °C und < 220 °C erfolgt.

**12.** Formkörper erhältlich nach einem Verfahren gemäß einem der Ansprüche 8 bis 11.

## Claims

1. The use of an aqueous polymer composition as a binder for fibrous or granular substrates, the aqueous polymer composition being obtainable by free radical initiated emulsion polymerization of a monomer mixture M in an aqueous medium in the presence of a polymer A, the polymer A being composed of

   a) from 80 to 100% by weight of at least one ethylenically unsaturated mono- and/or dicarboxylic acid [monomers A1] and
   b) from 0 to 20% by weight of at least one further ethylenically unsaturated monomer which differs from the monomers A1 [monomers A2], incorporated in the form of polymerized units,

   and the monomer mixture M being composed of

   i) from 0.01 to 10% by weight of at least one ethylenically unsaturated monomer M1 which comprises at least one epoxide group and/or at least one hydroxyalkyl group, and
   ii) from 90 to 99.99% by weight of at least one further ethylenically unsaturated monomer M2 which differs from the monomers M1,

   and those monomer mixtures which comprise

   - from 0.1 to 5% by weight of at least one $\alpha,\beta$-monoethylenically unsaturated mono- and/or dicarboxylic acid having 3 to 6 carbon atoms and/or the amide thereof and
   - from 50 to 99.9% by weight of at least one ester of acrylic and/or methacrylic acid with alkanols having 1 to 12 carbon atoms, or
   - from 0.1 to 5% by weight of at least one $\alpha,\beta$-monoethylenically unsaturated mono- and/or dicarboxylic acid having 3 to 6 carbon atoms and/or the amide thereof and
   - from 50 to 99.9% by weight of styrene and/or butadiene, or
   - from 0.1 to 5% by weight of at least one $\alpha,\beta$-monoethylenically unsaturated mono- and/or dicarboxylic acid having 3 to 6 carbon atoms and/or the amide thereof and
   - from 50 to 99.9% by weight of vinyl chloride and/or vinylidene chloride, or
   - from 0.1 to 5% by weight of at least one $\alpha,\beta$-monoethylenically unsaturated mono- and/or dicarboxylic acid having 3 to 6 carbon atoms and/or the amide thereof and
   - from 40 to 99.9% by weight of vinyl acetate, vinyl propionate and/or ethylene

   being used as monomers M2.

2. The use according to claim 1, the weight ratio of polymer A to monomer mixture M being from 10:90 to 90:10.

3. The use according to either of claims 1 or 2, polymer A being composed of 100% by weight of an ethylenically unsaturated monocarboxylic acid.

4. The use according to any of claims 1 to 3, acrylic acid being an ethylenically unsaturated monocarboxylic acid.

5. The use according to any of claims 1 to 4, the polymer A having a weight average molecular weight of $\geq$ 3000 g/mol and $\leq$ 20 000 g/mol, the molecular weight being measured by gel permeation chromatography.

6. The use according to any of claims 1 to 5, the monomers M1 and M2 of the monomer mixture M being selected so that the polymer M obtained by polymerization of the monomer mixture M has a glass transition temperature of $\geq$ -20°C and $\leq$ 105°C, the glass transition temperature being determined by the DSC method DIN 53765.

7. The use according to any of claims 1 to 6, the monomer M1 being selected from glycidyl acrylate, glycidyl methacrylate, 2-hydroxyethyl acrylate, 2-hydroxyethyl methacrylate, 3-hydroxypropyl acrylate, 3-hydroxypropyl methacrylate, 4-hydroxybutyl acrylate and/or 4-hydroxybutyl methacrylate.

8. A process for producing a molding from a fibrous or granular substrate with an aqueous polymer composition, wherein the fibrous or granular substrate is first impregnated with an aqueous polymer composition which is obtainable by free radical initiated emulsion polymerization of a monomer mixture M in an aqueous medium in the presence of a polymer A, the polymer A being composed of

a) from 80 to 100% by weight of at least one ethylenically unsaturated mono- and/or dicarboxylic acid [monomers A1] and
b) from 0 to 20% by weight of at least one further ethylenically unsaturated monomer which differs from the monomers A1 [monomers A2] incorporated in the form of polymerized units,

and the monomer mixture M being composed of

i) from 0.01 to 10% by weight of at least one ethylenically unsaturated monomer M1 which comprises at least one epoxide group and/or at least one hydroxyalkyl group, and
ii) from 90 to 99.99% by weight of at least one further ethylenically unsaturated monomer M2 which differs from the monomers M1,

and those monomer mixtures which comprise

- from 0.1 to 5% by weight of at least one α,β-monoethylenically unsaturated mono- and/or dicarboxylic acid having 3 to 6 carbon atoms and/or the amide thereof and
- from 50 to 99.9% by weight of at least one ester of acrylic and/or methacrylic acid with alkanols having 1 to 12 carbon atoms, or
- from 0.1 to 5% by weight of at least one α,β-monoethylenically unsaturated mono- and/or dicarboxylic acid having 3 to 6 carbon atoms and/or the amide thereof and
- from 50 to 99.9% by weight of styrene and/or butadiene, or
- from 0.1 to 5% by weight of at least one α,β-monoethylenically unsaturated mono- and/or dicarboxylic acid having 3 to 6 carbon atoms and/or the amide thereof and
- from 50 to 99.9% by weight of vinyl chloride and/or vinylidene chloride, or
- from 0.1 to 5% by weight of at least one α,β-monoethylenically unsaturated mono- and/or dicarboxylic acid having 3 to 6 carbon atoms and/or the amide thereof and
- from 40 to 99.9% by weight of vinyl acetate, vinyl propionate and/or ethylene

being used as monomers M2,
the impregnated fibrous or granular substrate is then brought into the desired form, and that form is subsequently dried.

**9.** The process according to claim 8, wherein the monomers M1 and M2 of the monomer mixture M are selected so that the polymer M obtained by polymerization of the monomer mixture M has a glass transition temperature of ≥ -20°C and ≤ 105°C, the glass transition temperature being determined by the DSC method DIN 53765.

**10.** The process according to claim 8 or 9, wherein the amount of aqueous polymer composition is chosen so that ≥ 1 g and ≤ 100 g of polymer composition, calculated as solid, are used per 100 g of fibrous or granular substrate.

**11.** The process according to claims 8 to 10, wherein the drying is effected at a temperature > 20°C and < 220°C.

**12.** A molding obtainable by a process according to any of claims 8 to 11.

## Revendications

**1.** Utilisation d'une composition aqueuse de polymère en tant que liant pour des substrats fibreux ou granulaires, la composition aqueuse de polymère pouvant être obtenue par polymérisation en émulsion initiée par voie radicalaire d'un mélange de monomères M dans un milieu aqueux en présence d'un polymère A, le polymère A étant formé par

a) 80 à 100 % en poids d'au moins un acide mono-et/ou dicarboxylique éthyléniquement insaturé [monomère A1] et
b) 0 à 20 % en poids d'au moins un autre monomère éthyléniquement insaturé, qui diffère du monomère A1 [monomère A2], sous forme copolymérisée,

et le mélange de monomères M étant composé de

i) 0,01 à 10 % en poids d'au moins un monomère éthyléniquement insaturé M1, qui contient au moins un groupe

époxyde et/ou au moins un groupe hydroxyalkyle, et

ii) 90 à 99,99 % en poids d'au moins un autre monomère éthyléniquement insaturé M2, qui diffère du monomère M1,

et, en tant que monomère M2, des mélanges de monomères qui contiennent

- 0,1 à 5 % en poids d'au moins un acide mono- et/ou dicarboxylique α,β-monoéthyléniquement insaturé comprenant 3 à 6 atomes C et/ou leur amide, et
- 50 à 99,9 % en poids d'au moins un ester de l'acide acrylique et/ou méthacrylique avec des alcanols comprenant 1 à 12 atomes C, ou
- 0,1 à 5 % en poids d'au moins un acide mono- et/ou dicarboxylique α,β-monoéthyléniquement insaturé comprenant 3 à 6 atomes C et/ou leur amide, et
- 50 à 99,9 % en poids de styrène et/ou de butadiène, ou
- 0,1 à 5 % en poids d'au moins un acide mono- et/ou dicarboxylique α,β-monoéthyléniquement insaturé comprenant 3 à 6 atomes C et/ou leur amide, et
- 50 à 99,9 % en poids de chlorure de vinyle et/ou de chlorure de vinylidène, ou
- 0,1 à 5 % en poids d'au moins un acide mono- et/ou dicarboxylique α,β-monoéthyléniquement insaturé comprenant 3 à 6 atomes C et/ou leur amide, et
- 40 à 99,9 % en poids d'acétate de vinyle, de propionate de vinyle et/ou d'éthylène,

étant utilisés.

**2.** Utilisation selon la revendication 1, dans laquelle le rapport en poids entre le polymère A et le mélange de monomères M est de 10:90 à 90:10.

**3.** Utilisation selon l'une quelconque des revendications 1 ou 2, dans laquelle le polymère A est formé par 100 % en poids d'un acide monocarboxylique éthyléniquement insaturé.

**4.** Utilisation selon l'une quelconque des revendications 1 à 3, dans laquelle l'acide acrylique représente un acide monocarboxylique éthyléniquement insaturé.

**5.** Utilisation selon l'une quelconque des revendications 1 à 4, dans laquelle le polymère A présente un poids moléculaire moyen en poids ≥ 3 000 g/mol et ≤ 20 000 g/mol, le poids moléculaire étant mesuré par chromatographie par perméation de gel.

**6.** Utilisation selon l'une quelconque des revendications 1 à 5, dans laquelle les monomères M1 et M2 du mélange de monomères M sont choisis de sorte que le polymère M obtenu par polymérisation du mélange de monomères M présente une température de transition vitreuse ≥ -20 °C et ≤ 105 °C, la température de transition vitreuse étant déterminée par le procédé DSC DIN 53765.

**7.** Utilisation selon l'une quelconque des revendications 1 à 6, dans laquelle le monomère M1 est choisi parmi l'acrylate de glycidyle, le méthacrylate de glycidyle, l'acrylate de 2-hydroxyéthyle, le méthacrylate de 2-hydroxyéthyle, l'acrylate de 3-hydroxypropyle, le méthacrylate de 3-hydroxypropyle, l'acrylate de 4-hydroxybutyle et/ou le méthacrylate de 4-hydroxybutyle.

**8.** Procédé de fabrication d'un corps moulé à partir d'un substrat fibreux ou granulaire avec une composition aqueuse de polymère, **caractérisé en ce que** le substrat fibreux ou granulaire est tout d'abord imprégné avec une composition aqueuse de polymère, qui peut être obtenue par polymérisation en émulsion initiée par voie radicalaire d'un mélange de monomères M dans un milieu aqueux en présence d'un polymère A, le polymère A étant formé par

a) 80 à 100 % en poids d'au moins un acide mono-et/ou dicarboxylique éthyléniquement insaturé [monomère A1] et

b) 0 à 20 % en poids d'au moins un autre monomère éthyléniquement insaturé, qui diffère du monomère A1 [monomère A2], sous forme copolymérisée,

et le mélange de monomères M étant composé de

i) 0,01 à 10 % en poids d'au moins un monomère éthyléniquement insaturé M1, qui contient au moins un groupe

époxyde et/ou au moins un groupe hydroxyalkyle, et
ii) 90 à 99,99 % en poids d'au moins un autre monomère éthyléniquement insaturé M2, qui diffère du monomère M1,

et, en tant que monomère M2, des mélanges de monomères qui contiennent

- 0,1 à 5 % en poids d'au moins un acide mono- et/ou dicarboxylique $\alpha,\beta$-monoéthyléniquement insaturé comprenant 3 à 6 atomes C et/ou leur amide, et
- 50 à 99,9 % en poids d'au moins un ester de l'acide acrylique et/ou méthacrylique avec des alcanols comprenant 1 à 12 atomes C, ou
- 0,1 à 5 % en poids d'au moins un acide mono- et/ou dicarboxylique $\alpha,\beta$-monoéthyléniquement insaturé comprenant 3 à 6 atomes C et/ou leur amide, et
- 50 à 99,9 % en poids de styrène et/ou de butadiène, ou
- 0,1 à 5 % en poids d'au moins un acide mono- et/ou dicarboxylique $\alpha,\beta$-monoéthyléniquement insaturé comprenant 3 à 6 atomes C et/ou leur amide, et
- 50 à 99,9 % en poids de chlorure de vinyle et/ou de chlorure de vinylidène, ou
- 0,1 à 5 % en poids d'au moins un acide mono- et/ou dicarboxylique $\alpha,\beta$-monoéthyléniquement insaturé comprenant 3 à 6 atomes C et/ou leur amide, et
- 40 à 99,9 % en poids d'acétate de vinyle, de propionate de vinyle et/ou d'éthylène,

étant utilisés,
le substrat fibreux ou granulaire imprégné étant ensuite mis sous la forme souhaitée et cette forme étant ensuite séchée.

**9.** Procédé selon la revendication 8, **caractérisé en ce que** les monomères M1 et M2 du mélange de monomères M sont choisis de sorte que le polymère M obtenu par polymérisation du mélange de monomères M présente une température de transition vitreuse $\geq$ -20 °C et $\leq$ 105 °C, la température de transition vitreuse étant déterminée par le procédé DSC DIN 53765.

**10.** Procédé selon la revendication 8 ou 9, **caractérisé en ce que** la quantité de composition aqueuse de polymère est choisie de sorte que, pour 100 g de substrat fibreux ou granulaire, $\geq$ 1 g et $\leq$ 100 g de composition de polymère, calculé en tant que solide, soit utilisée.

**11.** Procédé selon les revendications 8 à 10, **caractérisé en ce que** le séchage a lieu à une température > 20 °C et < 220 °C.

**12.** Corps moulé pouvant être obtenu par un procédé selon l'une quelconque des revendications 8 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- EP 257567 A
- EP 576128 A
- US 5314943 A
- US 4868016 A
- US 4670505 A
- EP 537910 A
- US 5143582 A
- DE 19729161 A
- DE 19900459 A
- DE 19900460 A
- DE 102006001979
- DE 4003422 A
- US 4269749 A


### In der Beschreibung aufgeführte Nicht-Patentliteratur


- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **A. ECHTE.** Handbuch der Technischen Polymerchemie. VCH, Weinheim, 1993
- **B. VOLLMERT.** Grundriss der Makromolekularen Chemie. E. Vollmert Verlag, 1988, vol. 1
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ull-mann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989